(19) Europäisches Patentamt
European Patent Office
Office européen des brevets

(11) Publication number: **0 039 165**
**B1**

# (12) EUROPEAN PATENT SPECIFICATION

(45) Date of publication of patent specification: **03.07.85**

(51) Int. Cl.[4]: **G 11 B 5/70**, C 08 K 5/34

(21) Application number: **81301615.1**

(22) Date of filing: **13.04.81**

## (54) Polyfunctional aziridine crosslinking agents for aqueous magnetic recording media binder.

(30) Priority: **17.04.80 US 141060**

(43) Date of publication of application:
**04.11.81 Bulletin 81/44**

(45) Publication of the grant of the patent:
**03.07.85 Bulletin 85/27**

(84) Designated Contracting States:
**DE FR GB IT**

(56) References cited:
**DE-A-1 269 363**
**DE-A-1 902 357**
**JP-A-51 103 403**
**US-A- 946 007**
**US-A-3 023 123**
**US-A-3 434 990**
**US-A-3 632 632**
**US-A-3 795 539**
**US-A-3 901 816**

(73) Proprietor: **MINNESOTA MINING AND MANUFACTURING COMPANY**
**3M Center, P.O. Box 33427**
**St. Paul, MN 55133 (US)**

(72) Inventor: **Pendergrass, Daniel B.**
**P.O. Box 33427 2501 Hudson Road**
**St. Paul Minnesota 55133 (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 039 165 B1

## Description

*Technical Field*

The present invention concerns a magnetic recording medium having a magnetizable layer comprising magnetizable particles in a binder. The invention specifically resides in the binder.

*Background Art*

A typical magnetic recording tape has a flexible plastic backing member carrying a layer of magnetizable particles in a polymeric binder. The tape may also have nonmagnetizable layers which likewise comprise inorganic particles dispersed in a polymeric binder. Other magnetic recording media are disks, drums, cards, etc., and may have rigid backing members. In order to apply either a magnetizable or a nonmagnetizable layer, the binder is usually dissolved in organic solvent which volatilizes. This is both wasteful and pollutes the atmosphere unless the solvent is recovered. The recovery of organic solvents is expensive and can involve danger of explosion and fire.

The aforementioned problems should be minimized by water-borne binders. However, other problems arise. For example, crosslinking agents, which usually are required to provide fully satisfactory physical properties such as good resistance to blocking and to wear, may react with water to form significant quantities of low-molecular-weight compounds that have deleterious effects. Some crosslinking agents have been suggested that are much less reactive with water, but these have required higher temperatures and/or longer times than are suitable for the manufacture of magnetic recording tape. It is not known whether any prior water-borne binder system avoids these problems and thus provides magnetic recording tape coatings having good physical properties such as resistance to blocking and to wear and acceptable magnetic recording properties.

*Disclosure of Invention*

The present invention concerns a method of making a magnetic recording medium comprising a backing member and a magnetizable layer, which method comprises the steps of

(1) preparing a dispersion of inorganic particles in a water-borne polymer having active-hydrogen, epoxy or epithio functional groups,

(2) adding a crosslinking agent to the dispersion, and

(3) coating the thus-modified dispersion onto the backing member,

(4) crosslinking the polymer, characterised in that:

the crosslinking agent is a polyfunctional aziridine having the formula

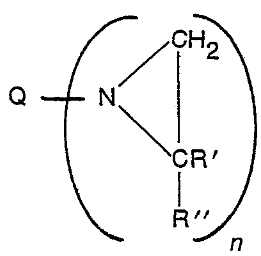

where Q is a *n*-valent inorganic or aliphatic, aromatic or alicyclic organic radical, *n* is at least 2, and each of R′ and R″ is hydrogen or alkyl.

The novel method provides magnetic recording media having physical and magnetic properties equal to those of presently commercial media made using organic solvents. The crosslinking water-borne dispersions used in the novel method have the highly desirable property of providing coatings wherein the binders become sufficiently crosslinked after heating at typical drying times and temperatures. Hence there need be no danger of distorting backing members such as would be involved in using some of the cross-linking water-borne dispersions that have been suggested in the prior art for applying coatings of magnetic recording media.

The crosslinking water-borne dispersions used in the novel method tend to have good pot life, equivalent to the pot lives of typical dispersions including crosslinking binder systems in organic solutions.

A number of water-borne binder systems have been suggested for magnetic recording tape use, e.g., U.S. Patents No. 3,023,123; 3,795,539; 3,901,816; Japanese Patent Publication J 51-103403 dated September 13, 1976, of Hitachi Maxell Co.; and U.S. Defensive Publication No. T 946,007 which was published in the Official Gazette of the United States Patent and Trademark Office on May 4, 1976, page 9. Of these, only 3,901,816 and the Defensive Publication disclose water-borne binders which are crosslinkable. The Defensive Publication has only one working example of a magnetizable coating (Example 1), its binder comprising 8.28 g of a copolymer of 85 parts of vinyl acetate and 15 parts of 2-ethylhexyl acrylate and 1.49 g of melamine formaldehyde condensate. The Defensive Publication calls this condensate and a number of other materials "intra-molecular cross-linking components" (page 7, line 14). However, the copolymer of Example 1 has no functional groups through which it could be crosslinked by

the melamine formaldehyde condensate. Even if it did, crosslinking by a melamine formaldehyde condensate would require higher temperatures than can be tolerated by the most widely used backing members. The Defensive Publication gives no information concerning either the magnetic or physical performance of the tape produced in that single working example.

U.S. 3,901,816 uses as a magnetic tape binder a mixture of a monofunctional and polyfunctional cyclic sulfonium zwitterions such as are shown at col. 4, formulas (a) and (b), respectively. The polyfunctional compounds serve as crosslinkers in the polymerization of the zwitterions (col. 2, lines 66—67).

The term "active-hydrogen" used herein is defined in terms of the well-known Tschugaeff-Zerewitinoff analytical technique, e.g., note J.A.C.S., 49, 2181 (1927).

Any polymer which has active-hydrogen, epoxy or epithio functional groups and coalesces into a strong, chemically-resistant film should be useful. Useful polymers may be obtained by copolymerizing monomers containing active-hydrogen groups with alkyl acrylates or methacrylates, styrene and/or butadiene, acrylonitrile, vinyl chloride, vinyl acetate or olefinic monomers such as ethylene. The alkyl acrylates and methacrylates may have 1—8 carbon atoms in the alkyl groups or mixtures may have an average of up to 8 carbon atoms in their alkyl groups. Useful functional groups include:

$-OH$

$-SH$

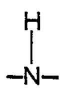

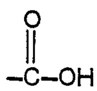

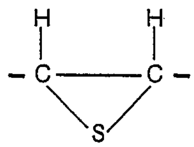

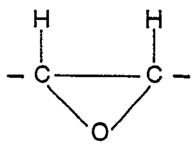

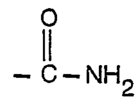

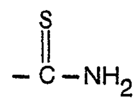

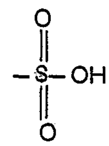

Carboxylic acid groups; are especially useful. Good results have been attained using carboxylic acid monomers to provide one carboxylic acid group for every 20 to 250 atoms in the skeletal backbone chain of the polymer. If there were one carboxylic acid groups for less than every 20 atoms in the skeletal backbone, the raw materials would tend to become more expensive at no apparent advantage. In order to have less than one carboxylic acid groups for every 250 skeletal atoms, it may be desirable that some other binder-toughening phenomenon take place in addition to crosslinking by the polyfunctional aziridine. For example, additional cross-linking may be initiated at double bonds in the polymer, as by electron beam. Supplemental binder-toughening could also be accomplished by using the polyfunctional aziridine to couple two or more incompatible polymers to form a phase-separated binder.

Primary and secondary amine groups and hydroxyl and phenolic groups react more slowly with the crosslinking agent than do carboxylic acid groups. The other above-identified groups tend to be even slower.

The polyfunctional aziridine may be any of the alkylenimine derivatives disclosed in U.S. Patent No. 3,225,013 (Fram) and may have the formula:

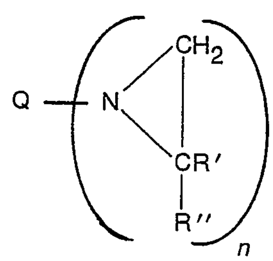

where Q is a *n*-valent radical, *n* is at least 2 (preferably 3 or 4), N is preferably linked to an atom having a valence of 4 or 5 (most preferably C or P), and each R′ and R″ is hydrogen or an alkyl group which is preferably a lower alkyl group having from 1 to 8, preferably from 1 to 4, carbon atoms. Q may be an aliphatic, aromatic or alicyclic organic radical which may contain atoms such as oxygen, sulfur, nitrogen, etc. Q may also be an inorganic radical, such as

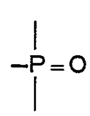 or 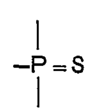 .

Q preferably is

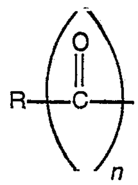

or

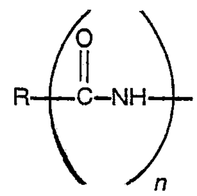

or

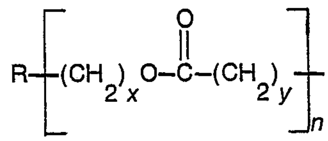

where R is an $n$-valent aliphatic, aromatic or alicyclic radical which may contain atoms other than carbon, e.g., oxygen, nitrogen or sulfur, and each of $x$ and $y$ is 0 or 2.

The polyfunctional aziridine is usually employed at 2—25% by weight of the polymer. Below 2%, the polymer may not become sufficiently crosslinked to provide desirably good resistance to wear and blocking.

Normally it is preferred that the functionalities of the polymer and polyfunctional aziridine be approximately equal. However, there usually is no difference in result if the polymer contains excess functional groups, and in some cases the excess functional groups may produce beneficial results. For example, excess carboxylic acid groups should have a reinforcing effect by virtue of bonds between the polymer and the dispersed inorganic particles. Any excess polyfunctional aziridine will usually hydrolyze to a secondary amine that should react with the remaining aziridine so that there should be no adverse consequences.

Upon using the novel water-borne dispersions of inorganic particles, polymer and polyfunctional aziridine to make flexible magnetic recording tape, the wet coating can initially be exposed to rather high air temperatures because the evaporating water effectively cools the backing. For example, if the wet coating is passed through an air-circulating oven at an air temperature of 225°C, the actual temperature of the backing is not likely to exceed 40°C until more than 80% of the water has evaporated. At that point, it usually is desirable to convey the coated backing member into a cooler oven, e.g., 95°C air temperature, to avoid distortion to the backing member. As soon as the water has substantially volatilized, the coated tape can be wound upon itself into roll form, although it is usually desirable to pass it through a zone of ordinary room temperature for about 30 seconds before the windup. At this point, the polymer of the coating should be substantially completely crosslinked if it included carboxylic acid groups. If the functional groups of the polymer are less reactive than carboxylic acid groups, it may be desirable to heat the coatings for a period of time after the water has volatilized and before the windup. Alternatively it may be sufficient merely to store the wound tape for a week or more at ordinary room temperatures before use.

As is common in the use of crosslinking agents, the polyfunctional aziridine should be added to the water-borne dispersion immediately prior to coating. Usually the polyfunctional aziridine should first be diluted with water to avoid coagulation upon adding it to the dispersion. In order to improve the compatibility, the polyfunctional aziridine may also be diluted with some organic solvent such as isopropanol and/or 2-butoxyethanol, preferably in amount not exceeding ten percent by weight of the nonvolatile components of the dispersion. After adding the polyfunctional aziridine, the pH is preferably kept above about 7, e.g., by adding a small quantity of a volatile amine that will largely evaporate during drying. By doing so, a pot life of 24 to 48 hours is usually attainable.

Various types of both magnetizable and non-magnetizable inorganic particles such as carbon black and aluminum oxide have been successfully coated in the practice of the present invention. The novel water-borne dispersions can be coated out at least as conveniently and economically as can comparable organic-solvent-borne dispersions. Raw materials for the novel water-borne dispersions are readily available commercially at reasonable cost. Resistance to wear and blocking of the coatings is excellent. Furthermore, when employing the widely used biaxially-oriented polyethylene terephthalate film backing, the performance of coatings from the novel water-borne dispersions may be significantly improved over coatings from solvent-borne dispersions since cyclic oligomers, principally trimers, can be extracted from the film backing by the organic solvent and can then begin to migrate to and crystallize on the surface of the recording layer. The novel water-borne dispersions show little or no tendency for such extraction from polyethylene terephthalate film backings.

*Cling Value*

It has been found that the following test is useful in predicting a type of failure in which exposure of a roll of flexible magnetic recording tape to certain ambient conditions can result in an undesirable layer-to-layer cling. The cling problem can manifest itself in tension variations as the tape is unwound. Tape to be tested is firmly wound at 1.5 to 2.5 oz (40—70 g) tension on a 4.5-inch (11.4-cm) hub to a roll diameter of 7.5 to 10.5 inches (19—27 cm). The roll is successively conditioned at 21° ± 3°C and 50% ± 10% RH for 24

hours; at 52° ± 1°C and less than 5% RH for 1 hour; at 40° ± 2°C and 94% ± 4% RH for 24 hours; at 52° ± 1°C and less than 5% RH for 2 hours; and at 21° ± 3°C and 50% ± 10% RH for a minimum of 2 hours. While positioned on a horizontal spindle at the last-mentioned condition, tape is unwound and cut at the roll when a radial thickness of 1.5 to 3 cm of the tape remains on the hub. The roll is then rotated in the unwind direction until the free end of the tape rises to the height of the spindle. Unwinding is continued while the free end is separated from the roll until the weight of the unwound tape effects self-unwinding. The length of unwound tape is recorded as a Cling Value. If the Cling Value for 1/4-inch (0.6-cm) tape is less than 20 cm, there should be no cling problem. If there is self-unwinding before the free end of the tape rises to the height of the spindle, the Cling Value is 0 cm.

The polyfunctional aziridine used in Examples 1—10 is believed to have the formula

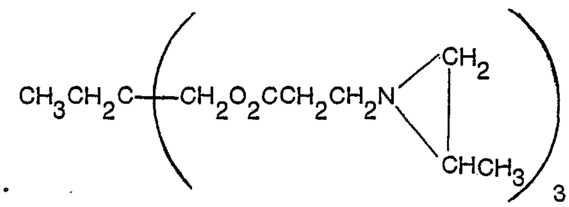

It was obtained as "CX-100" from Polyvinyl Chemical Industries.

In the examples, all parts are by weight.

Example 1

A mill was charged with 100 parts of an acicular gamma iron oxide with a 5:1 aspect ratio and a 0.4-micrometer mean length, two parts of a dispersant, two parts of N,N-dimethylaminoethanol and 120 parts of deionized water. After the resulting slurry was milled until smooth, 75.5 parts of an emulsion of a copolymer (33.5% solids in water) was added. The copolymer had been emulsion-polymerized from 60 parts butyl acrylate, 20 parts methyl methacrylate, 15 parts 2-hydroxyethyl acrylate, 5 parts methacrylic acid and 0.05 part t-dodecyl mercaptan. To the copolymer-containing slurry was added 2.6 parts of polyfunctional aziridine and 3 parts of a fatty acid ester lubricant to provide a water-borne dispersion which was filtered, deaerated and knife coated onto an air-plasma-primed, biaxially-oriented polyethylene terephthalate film of 23 micrometers thickness. The wet coating was magnetically oriented in the longitudinal direction and subsequently dried in an oven at about 90°C for 120 seconds. After polishing, the coated film was slit into standard magnetic recording tape widths.

Examples 2—10

Additional magnetic recording tapes were prepared as in Example 1 except using emulsions of different polymers and in some cases adjusting the slurry as indicated below. The polyethylene terephthalate film of Examples 3—6 was unprimed and in Example 7 had been corona-primed and provided with a subbing layer consisting of electrically-conductive carbon particles in a polymeric binder. Because of the subbing layer, it was difficult to measure the thickness of the magnetizable coating, and hence also its $B_r$, so that these values as reported in Table I below are based in part upon estimates.

*In Example 2:* 85.3 parts of an acrylic polymer hydrosol (30% solids) having pendant carboxylic acid groups (Acid No. 32). The hydrosol was obtained from E. I. duPont De Nemours & Co. as "EP 7015" having $T_g$ of 60°C.

*In Example 3:* Mixture of two acrylic emulsions, namely 22 parts of "WL-81" (41.5% solids) and 40 parts of "E-1284" (45.5 solids), both supplied by Rohm & Haas. Each had pendant carboxylic acid groups. This mixture of emulsions was diluted with 20 parts deionized water before being added to the slurry of magnetizable particles. The "WL-81" and "E-1284" had $T_g$1of 59° to 79°C and −10° to 0°C, respectively. The "WL-81" provided a hardness to the binder and the "E-1284" provided a softness, thus permitting a desired degree of hardness to be obtained by adjusting their relative proportions. In the slurry 2-amino-2-methyl-1-propanol was used instead of the N,N-dimethylaminoethanol.

*In Example 4:* 74.4 parts of aqueous colloidal dispersion of an aliphatic urethane (34% solids) having pendant carboxylic acid groups (Acid No. 29.5) available as "R-960" from Polyvinyl Chemical Industries. Its $T_g$ was 45°C.

*In Example 5:* 72.3 parts of aqueous emulsion of a fully reacted polyurethane (35% solids) having secondary amine groups available as "Witcobond W-160" from Witco Chemical Co. Its $T_g$ was −45° to −49°C.

*In Example 6:* 35.2 parts of a water-reducible acrylic resin (70% solids in isopropanol) having pendant carboxylic acid groups (Acid No. 70) available as "Arolon 557-D70" from Ashland Chemical Co. was diluted with 44.1 parts of deionized water and 2.9 parts of triethylamine before being added to the slurry of magnetizable particles (which differed from the slurry of Example 1 in that it contained 2 parts of triethylamine instead of the N,N-dimethylaminoethanol).

*In Example 7:* Water-borne latex of a copolymer prepared from

| | Parts |
|---|---|
| deionized water | 100 |
| n-butyl acrylate | 25 |
| methyl methacrylate | 45 |
| 2-hydroxyethylacrylate | 14 |
| methacrylic acid | 10 |
| glycidyl methacrylate | 6 |
| t-dodecyl mercaptan | 0.05 |

This latex by itself would be self-crosslinking, but the presence of the polyfunctional aziridine in the coating dispersion provided further crosslinking in order to provide a tape having a desirably low value in the Cling Test.

*In Example 8:* 45.7 parts of a carboxylated styrene-butadiene emulsion (48% solids) believed to be about 51% styrene, 45% butadiene, and 4% itaconic acid obtained from Dow Chemical Company as "XD 30295". Two parts of a fatty acid ester were used as the lubricant.

*In Example 9:* 135.7 parts of aqueous colloidal dispersion of a copolymer of ethylene and acrylic acid (30% solids) available as "XD 8931" from Dow Chemical Company, 1.7 parts of 2-butoxyethanol ("Butyl Cellosolve"), and 3.3 parts of a 10% solution of fluorochemical surfactant.

*In Example 10:* 88 parts of a colloidal dispersion of a sulfonated polyester (30% solids in 80/20 water/isopropanol) available as "WD Size" from Eastman Chemical Products, Inc. and 17.7 parts deionized water.

Example 11

A magnetic recording tape was prepared in the same manner as in Example 1, except using a polyfunctional aziridine which is believed to be a mixture of:

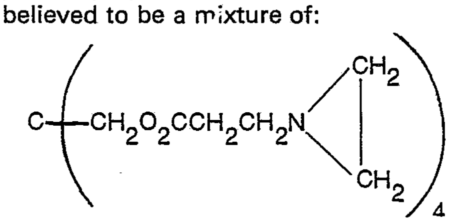

and

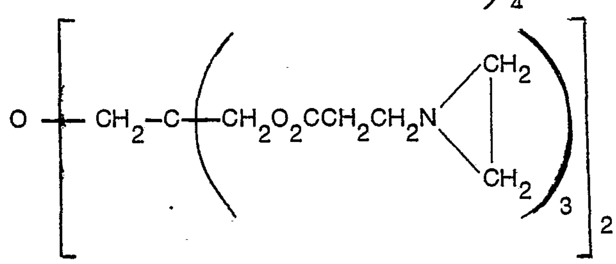

It was obtained from Cordova Chemical Co. as "XAMA-7".

Example 12

The example employed the following polyfunctional aziridine:

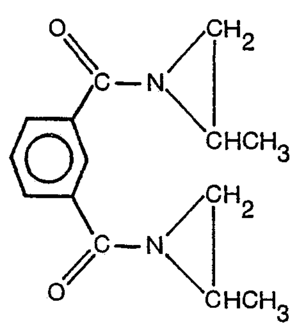

Because this polyfunctional aziridine does not dissolve in water, it was dispersed in equal parts of water. A magnetic recording tape was prepared as in Example 1 except using this different polyfunctional aziridine and that the polyethylene terephthalate film was unprimed and 80 parts of the emulsion were employed.

Example 13

This example was identical to Example 9 except for using the following polyfunctional aziridine:

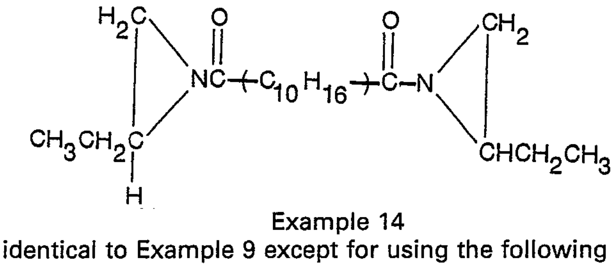

Example 14

This example was identical to Example 9 except for using the following polyfunctional aziridine:

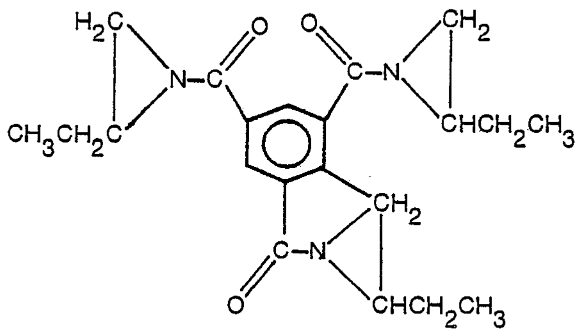

The amounts of the polyfunctional aziridine employed in making the magnetic recording tapes of Examples 1—11 and results of tests on the tapes are reported in Table I.

TABLE I

| Example | Parts of Aziridine | Coating Thickness (micrometers) | Br (Gauss) (Tesla×10⁴) | $H_c$ (Oe) (A/m÷80) | Squareness |
|---|---|---|---|---|---|
| 1 | 2.6 | 8.2 | 1050 | 326 | 0.75 |
| 2 | 3 | 8.2 | 925 | 322 | 0.78 |
| 3 | 1.3 | 10.6 | 1000 | 340 | 0.76 |
| 4 | 1.4 | 12.2 | 1010 | 350 | 0.79 |
| 5 | 1.4 | 8.2 | 1190 | 337 | 0.79 |
| 6 | 4.2 | 7.95 | 1025 | 350 | 0.75 |
| 7 | 1.3 | 8.5 | 1100 | 342 | 0.82 |
| 8 | 0.93 | 8.4 | 1510 | 324 | 0.79 |
| 9 | 1.3 | 10.7 | 1040 | 327 | 0.81 |
| 10 | 2.7 | 10.2 | 1110 | 333 | 0.74 |
| 11 | 2.6 | 7.9 | 1020 | 319 | 0.75 |
| 12 | 2 | 7.9 | 1190 | 322 | 0.78 |
| 13 | 2 | 10.7 | 1130 | 323 | 0.77 |
| 14 | 2 | 9.4 | 1180 | 321 | 0.77 |

Each of the tapes of Examples 1—7, 9 and 11—14 exhibited excellent resistance to blocking as measured by the procedure of GSA-FSS Interim Federal Specification W-T-001572 Section 4.4.8, May 17, 1972, except after conditioning at 66°C/80% RH. The resistance to blocking of the tapes of Examples 8 and 10 was as good as that of many magnetic recording tapes now on the market. Each of the tapes of Examples 1—7 and 9—14 exhibited excellent resistance to wear at ordinary ambient conditions. That of the tape of Example 8 was fair and about equal to that of some audio tapes now on the market but not as good as many.

Only the tapes of Examples 4 and 7 were subjected to the Cling Test with the following results (minimum length of free tape to cause roll to unwind spontaneously)

| | |
|---|---|
| Example 4 | 3 cm |
| Example 7 | 0 cm. |

*Resin Mixture A*

100 parts of the water-reducible acrylic resin (70% solids in isopropanol) of Example 6; 125.3 parts of deionized water; 8.2 parts of triethylamine.

Examples 15—18

Magnetic recording tapes were made as in Example 1 except that the polyethylene terephthalate film was unprimed and that Resin Mixture A was used in place of the emulsion and differing amounts of the polyfunctional aziridine were used as indicated in Table II:

TABLE II

| Example | Parts of Resin Mixture A | Amount of Aziridine Parts | % of polymer |
|---|---|---|---|
| 15 | 93 | 2.7 | 10 |
| 16 | 89 | 3.8 | 15 |
| 17 | 85.3 | 4.7 | 20 |
| 18 | 82 | 5.8 | 25 |

Each of the tapes of Examples 15—18 exhibited excellent resistance to blocking after conditioning at 66°C/80% RH. The tapes of Examples 17 and 18 exhibited excellent resistance to wear at ordinary ambient conditions. The resistance to wear of the tape of Example 16 was quite good, although not as good as that of the tapes of Examples 1—7, 9—11 and 17—18. The resistance to wear of the tape of Example 15 was fair and about equal to that of the tape of Example 8. The lesser resistance to wear of the tape of Example 15 compared to the tapes of Examples 16—18 is attributable to the fact that in Example 15, the functionality of the aziridine was about 30% below that of the polymer.

*Comparative Tape*

A magnetic recording tape similar to those of Examples 15—18 except omitting the polyfunctional aziridine had extremely poor resistance to wear. It blocked after conditioning at 66°C/80% RH, and another sample blocked after conditioning at 50°C/85% RH.

Table III reports results of tests on the tapes of Examples 15—18:

| Example | Coating Thickness (micrometers) | Br (Gauss) | $H_c$ (Oersted) | Squaren ss |
|---|---|---|---|---|
| 15 | 7.4 | 1090 | 334 | 0.77 |
| 16 | 7.9 | 1040 | 329 | 0.77 |
| 17 | 10.9 | 960 | 334 | 0.77 |
| 18 | 7.4 | 920 | 333 | 0.77 |

Examples 19 and 20

Two tapes with a magnetizable coating similar to that of Example 7 except with an oxide weight loading of 80% and 0.66 parts of aziridine crosslinker were prepared as in Example 1. Subsequently a coating was applied to the back surface of each as follows:

*In Example 19:* A mill was charged with 100 parts of conductive carbon black ("Vulcan XC-72"), 20 parts dispersant, 4 parts N,N-dimethylaminoethanol, and 280 parts deionized water. After the resulting slurry was milled until smooth, 230 parts of the urethane dispersion described in Example 4 was added together with 4 parts of the polyfunctional aziridine of Example 1—10 and 698 parts deionized water.

*In Example 20:* An aqueous colloidal dispersion of an aromatic urethane (34% solids) supplied by Spencer Kellogg Divison of Textron, Inc. as "XP-4578" was substituted for the urethane dispersion of Example 19.

The backside coatings of each of Examples 19 and 20 were applied using a knife-coater and dried in an oven at about 90°C for 120 seconds to a dried thickness of about 2.3 micrometers. Each backside coating was very strongly adherent and had a resistivity of about 1000 ohms per square. Both tapes had excellent blocking resistance after conditioning at 66°C/80% RH.

## Claims

1. A method of making a magnetic recording medium comprising a backing member and a magnetizable layer, which method comprises the steps of

(1) preparing a dispersion of inorganic particles in a water-borne polymer having active-hydrogen, epoxy or epithio functional groups,

(2) adding a crosslinking agent to the dispersion, and

(3) coating the thus-modified dispersion onto the backing member,

(4) crosslinking the polymer, characterised in that:

the crosslinking agent is a polyfunctional aziridine having the formula

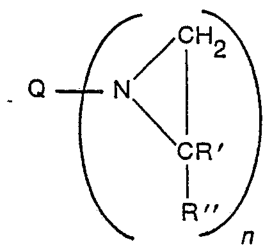

where Q is a $n$-valent inorganic or aliphatic, aromatic or alicyclic organic radical, $n$ is at least 2, and each of R′ and R″ is hydrogen or alkyl.

2. A method as defined in claim 1, wherein: said inorganic particles are magnetizable particles.

3. A method as defined in claim 1, wherein:

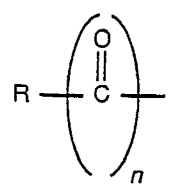

or

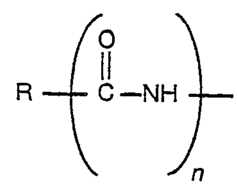

or

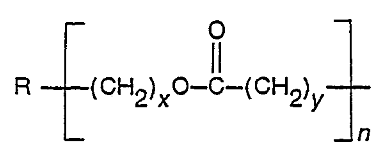

where R is an $n$-valent aliphatic, aromatic or alicyclic radical, and each of $x$ and $y$ is 0 or 2.

4. A method as defined in claim 3, wherein: the polyfunctional aziridine is

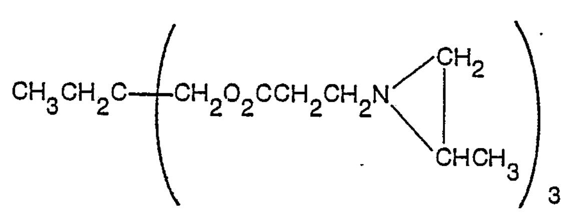

.

5. Magnetic recording medium made by a method as defined by claims 1 or 2.

6. Magnetic recording medium comprising a backing member carrying a water-borne layer of inorganic particles in a binder comprising a crosslinked polymer which had active-hydrogen, epoxy or epithio functional groups, wherein:

the crosslinking agent was a polyfunctional aziridine having the formula

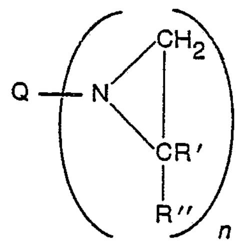

where Q is a *n*-valent inorganic or aliphatic, aromatic or alicyclic organic radical, *n* is at least 2, and each of R′ and R″ is hydrogen or alkyl.

7. Magnetic recording medium as defined in claim 6 wherein said inorganic particles are magnetizable particles.

**Patentansprüche**

1. Verfahren zum Herstellen eines magnetischen Aufzeichnungsträgers mit einem Träger und einer magnetisierbaren Schicht, mit folgenden Schritten:

(1) Es wird eine Dispersion von anorganischen Teilchen in einem in Wasser aufnehmbaren Polymer hergestellt, das funktionelle Aktivwasserstoff-, Epoxid- oder Epithiogruppen besitzt,

(2) der Dispersion wird ein Vernetzungsmittel zugesetzt,

(3) die auf diese Weise modifizierte Dispersion wird auf den Tragkörper aufgetragen und

(4) das Polymer wird vernetzt,

dadurch gekennzeichnet, daß das Vernetzungsmittel ein mehr-funktionelles Aziridin mit der Formel

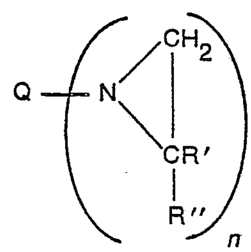

ist, in der Q ein n-wertiges anorganisches oder ein aliphatisches, aromatisches oder alizyklisches organisches Radikal, n mindestens 2 und R′ und R″ jeweils Wasserstoff oder Alkyl ist.

2. Verfahren nach Anspruch 1, dadurch gekennzeichnet, daß die anorganischen Teilchen magnetisierbare Teilchen sind.

3. Verfahren nach Anspruch 1, dadurch gekennzeichnet, daß Q

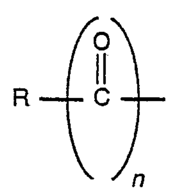

oder

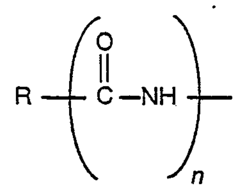

oder

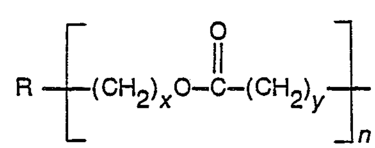

ist, wobei R ein n-wertiges aliphatisches, aromatisches oder alizyklisches Radikal und x und y jeweils 0 oder 2 ist.

4. Verfahren nach Anspruch 3, dadurch gekennzeichnet, daß das mehrfunktionelle Aziridin

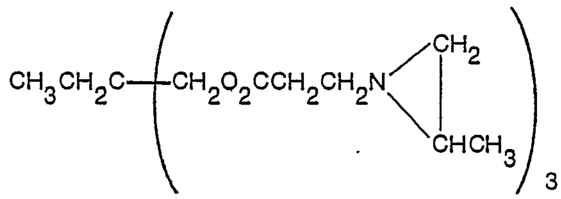

ist.

5. Magnetischer Aufzeichnungsträger, hergestellt nach einem Verfahren nach Anspruch 1 oder 2.

6. Magnetischer Aufzeichnungsträger mit einem Träger, der eine in Wasser aufnehmbare Schicht aus anorganischen Teilchen in einem Bindemittel trägt, das ein vernetztes Polymer enthält, das funktionelle Aktivwasserstoff-, Epoxid- oder Epithiogruppen besaß, dadurch gekennzeichnet, daß das Vernetzungsmittel ein mehrfunktionelles Azridin mit der Formel

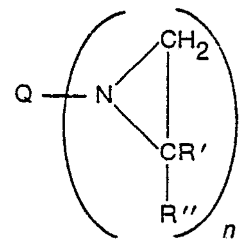

war, in der Q ein n-wertiges anorganisches oder ein aliphatisches, aromatisches oder alizyklisches organisches Radikal, n mindestens 2 und R′ und R′′ jeweils Wasserstoff oder Alkyl ist.

7. Magnetischer Aufzeichnungsträger nach Anspruch 6, dadurch gekennzeichnet, daß die anorganischen Teilchen magnetisierbare Teilchen sind.

**Revendications**

1. Procédé pour préparer un moyen d'enregistrement magnétique comprenant un élément support et une couche magnétisable, ledit procédé, qui comprend les stades de

(1) préparation d'une dispersion de particules minérales dans un polymère aqueux ayant des groupes fonctionnels hydrogène actif, époxy ou épithio,

(2) addition d'un agent réticulant à la dispersion, et

(3) revêtement de l'élément support avec la dispersion ainsi modifiée,

(4) réticulation du polymère, étant caractérisé en ce que

l'agent réticulant est une aziridine polyfonctionelle ayant pour formule

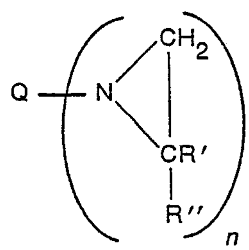

dans laquelle Q est un radical minéral ou organique aliphatique, aromatique ou alicyclique *n*-valent, n est au moins 2 et chacun des R′ et R′′ est un hydrogène ou un alkyle.

2. Procédé selon la revendication 1, caractérisé en ce que lesdites particules minérales sont des particules magnétisables.

3. Procédé selon la revendication 1, caractérisé en ce que Q est

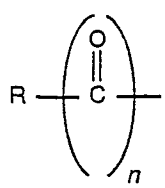

ou

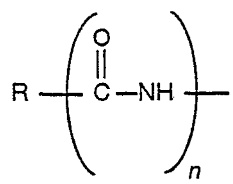

ou

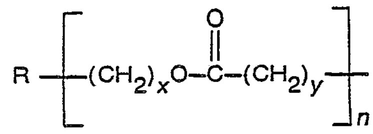

où R est un radical aliphatique, aromatique ou alicyclique *n*-valent, et chacun des *x* et *y* est 0 ou 2.

4. Procédé selon la revendication 3, caractérisé en ce que l'aziridine polyfonctionnelle est

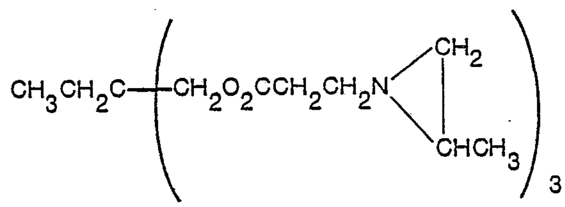

.

5. Moyen d'enregistrement magnétique, caractérisé en ce qu'il est préparé selon le procédé des revendications 1 ou 2.

6. Moyen d'enrigistrement magnétique comprenant un élément support portant une couche déposée par voie aqueuse de particules minérales dans un liant comprenant un polymère réticulé qui a des groupes fonctionnels hydrogène actif, époxy ou épithio, où:

l'agent réticulant est une aziridine polyfonctionnelle ayant pour formule

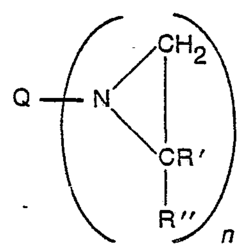

où Q est un radical minéral ou organique aliphatique, aromatique ou alicyclique *n*-valent, *n* est au moins 2, et chacun des R' et R'' est un hydrogène ou un alkyle.

7. Moyen d'enregistrement magnétique selon la revendication 6, caractérisé en ce que lesdites particules minérales sont des particules magnétisables.